# EUROPEAN PATENT APPLICATION

(11) **EP 2 116 468 A2**
(43) Date of publication of application: **11.11.2009**
(21) Application number: 09158783.2
(22) Date of filing: 24.04.2009
(51) Int. Cl.: B64D 13/00

(54) **Systems and methods for a passive, forced convection cooling system**

(30) Priority: 07.05.2008 US 116786
(71) Applicant: Honeywell International Inc., Morristown, NJ 07962 (US)
(72) Inventor: Storch, David Robert, Morristown, NJ 07962-2245 (US)
(74) Representative: Buckley, Guy Julian

(57) **Abstract**

Systems and methods for a passive, forced convection cooling system (110). A system for passive forced convection cooling includes, an intake port (302) located in an area of high pressure on an air frame. The system further has an exhaust port (304) located in an area of low pressure on an air frame. The areas of high and low pressure refer to areas of comparatively high and low pressure regions of the exterior ambient environment. Further still, an internal cooling duct (306) connecting the intake port (302) with the exhaust port (304), such that air flows from the intake port (302) through the cooling duct (306) to the exhaust port (304). Additionally the system contains, at least one heat sink (308) located in proximity of the intake port (302) and orientated inside the cooling duct (306) in order to allow the cool air traveling through the cooling duct (306) to cool the at least one heat sink (308).

## Description

### BACKGROUND OF THE INVENTION

With continuous advances in technology, electronics are dissipating an increasing amount of power in a decreasing amount of space. This presents significant thermal management challenges to keep junction temperatures of components below maxima for performance and life. Additionally, aerospace platform manufacturers are increasing the use of composite materials in an effort to reduce weight. The replacement of metals, which are excellent heat conductors, with composites, which are poor heat conductors, reduces the effectiveness of sinking heat from electrical components to platform structure

Typically electronics are attached to heat sinks that have fins, pins, or slots and those fins, pins or slots conduct heat directly to the airframe or indirectly to the airframe, through air pockets within the airframe. Because of the historic use of metal in the airframe, the heat could be drawn away from the electronics. With advances in composite materials, the use of the airframe or pockets within the airframe are no longer viable because the composite material cannot conduct the heat away from the electronics.

Other methods of dissipating heat include passive convection cooling systems which are not capable of dissipating the large quantity of heat generated by electrical components. Simultaneously, forced convection cooling systems, which are typically active systems, have significant weight, cost and reliability concerns, due to the use of fans, pumps, reservoirs, and the need for additional electronic drivers.

### SUMMARY OF THE INVENTION

Systems and methods for a passive, forced convection cooling system for aircraft electronic systems in disclosed herein. An example system for passive forced convection cooling includes, an intake port located in an area of high pressure on an air frame. The system further has an exhaust port located in an area of low pressure on an air frame. The areas of high and low pressure refer to areas of comparatively high and low pressure regions of the exterior ambient environment. Further still, an internal cooling duct connects the intake port with the exhaust port, such that air flows from the intake port through the cooling duct to the exhaust port. Additionally the system contains, at least one heat sink located in proximity of the intake port and orientated inside the cooling duct in order to allow the cool air traveling through the cooling duct to cool the at least one heat sink. A method for passive forced convection cooling includes a constant air flow created through an internal area of an airplane when an intake port is located in an area of high pressure on the airplane and an exhaust port is located on an area of low pressure of the aircraft, the intake port and exhaust port connected by a cooling duct; and a temperature sensitive device that is cooled by a heat sink in communication with the cooling duct.

### BRIEF DESCRIPTION OF THE DRAWINGS

The preferred and alternative embodiments of the present invention are described in detail below with reference to the following drawings:

FIGURE 1 shows a an aircraft using a passive forced convection cooling system;

FIGURE 2 shows an exemplary wing have a plurality of intake vents; and

FIGURE 3 shows a cross section of an example passive forced convection cooling system.

### DETAILED DESCRIPTION OF THE PREFERRED EMBODIMENT

Systems and methods for a passive, forced convection cooling system for aircraft electronic systems in disclosed herein. In one embodiment, the system draws air from outside the aircraft through a series of cooling ducts before exhausting the air to the outside environment. The system generally utilizes a heat sink with the cooling ducts to transfer heat from a temperature sensitive device to ambient air.

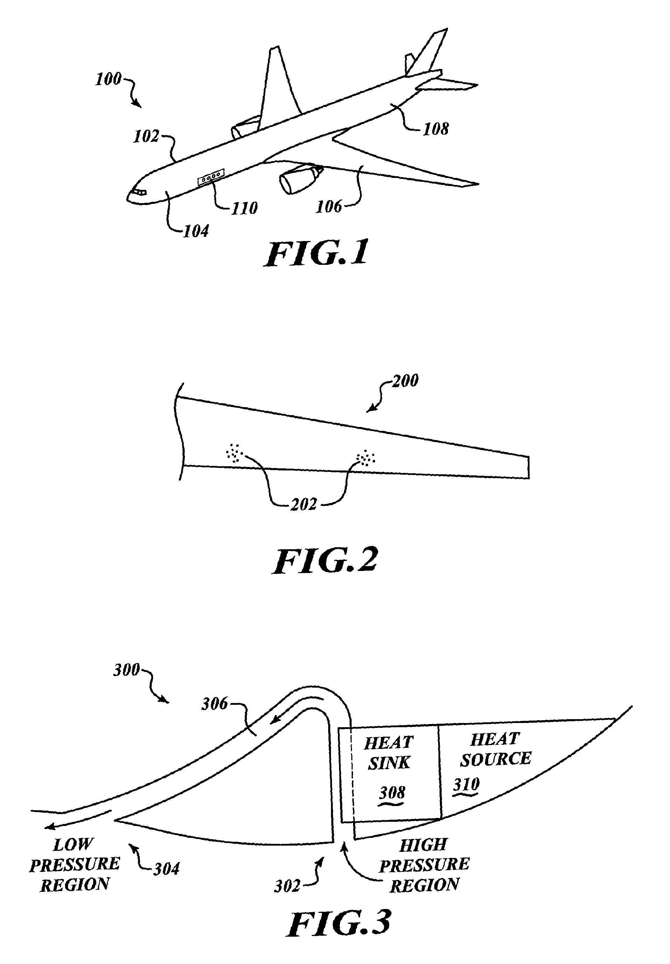

FIGURE 1 shows an aircraft 100 using a passive forced convection cooling system. The exemplary aircraft 100 includes a fuselage 104, wings 106, and a tail 108. The fuselage 104 and wings 106 includes areas of high pressure and areas of low pressure. The aircraft 100 generally has a plurality of temperature sensitive devices (not shown) on the aircraft 100 that need to be cooled to operate properly. A passive forced convection cooling system 110 may be located on the top, bottom or side of the fuselage 104 or on the under wing surfaces. The cooling system 110 is advantageously placed on areas of the aircraft that will not create substantial drag effect other performance attributes of the aircraft 100. The cooling system 110 allows for cool outside air to be run through a series of ports over a heat sink in order to draw heat away from temperature sensitive devices.

FIGURE 2 shows a cross section view of an exemplary wing 200 have a plurality of intake vents 202. As shown smaller and fewer intake ports cause less drag in the airframe. The wing 200 has areas of high and low pressure. The areas of high pressure are located under the wing 200, where the air is moving the slowest. Wherein the areas of low pressure exist above the wing 200 or near the trailing edge of the wing 200 and generally where air is moving the slowest. The intake vents 202 are generally placed in an area of low pressure that would not increase drag, whereas the exhaust vents (not shown) are place in an area of pressure lower than then intake vents and generally on the trailing edge of the wing 202. The intake vents 202 and the exhaust vents (not shown) generally include a plurality of small openings that are covered to block debris and to only allow air to pass.

FIGURE 3 shows a cross section of an example passive forced convection cooling system. The system has at least one intake port 302 in an area of high pressure and at least one exhaust port 304 in an area of low pressure. The areas of high and low pressure refer to areas of comparatively high and low pressure regions of the exterior ambient environment. The intake port 302 and exhaust port 304 are connected with a cooling duct 306 and are shaped to maintain a unidirectional airflow. The internal cooling duct 306 passes airflow over a heat sink 308 which drains heat from temperature-sensitive device(s) 310 such as electronics (navigation systems, radio's, etc). The heat sink 308 and the temperature sensitive device 310 are preferably located near to the exterior of the airframe. Advantageously, the cooling air in the system is continuously refreshed, expelling air that has been heated by the heat sink 308. The air heated by the heat sink 308 is warmed causing the air to rise in respect to the ambient air within the cooling duct 306. This improves airflow within the cooling duct 306, therefore increasing cooling capacity without the use of pumps, fans and additional electronic drivers.

In one embodiment, one side of the heat sink 308 is thermally coupled to a temperature sensitive device 310 in order to absorb heat quickly and efficiently. The opposite side of the heat sink 308 has fins, pins and/or slots, which are located in the cooling duct 306. Being part of the cooling duct 306 allows air to pass over the fins, pins or slots thereby cooling the heat sink 308. The temperature sensitive device side of the heat sink 308 is sealed from the cooling duct 306 in order to protect the temperature sensitive device 310 from outside contaminants like humidity, deicing fluid, or fuel. The finned, pinned, or slotted side of the heat sink 308 will reside within or against the cooling duct. The side of the heat sink 308 with the electronics is sealed using gaskets, welds, or any other means. The heat sink 308 is generally constructed with aluminum but may also be made of copper, magnesium, carbon foam, or any other standard heat sink material.
The embodiments of the invention in which an exclusive property or privilege is claimed are defined as follows:

## Claims

1. A system (300) for passive forced convection cooling comprising:
an intake port (302) located in an area of high pressure on an aircraft (100);
an exhaust port (304) located in an area of low pressure on an aircraft (100);
an internal cooling duct (306) connecting the intake port (302) with the exhaust port (304), such that an airflow travels from the intake port (302) through the cooling duct (306) to the exhaust port (304); and
at least one heat sink (308) located in proximity of the intake port (302) and orientated inside the cooling duct (306) in order to allow the airflow traveling through the cooling duct (306) to cool the at least one heat sink (308).

2. The system of Claim 1, wherein the intake port (302) and the exhaust port (304) are located on a wing (106) of an aircraft (100).

3. The system of Claim 1, wherein the intake port (302) and the exhaust port (304) are located on a fuselage (104) of an aircraft.

4. The system of Claim 1, wherein at least one of the intake port (302) and the output port (304) contain means to block debris from entering the internal cooling duct (306).

5. The system of Claim 1, wherein at least one of the intake port and the exhaust port (304) are shaped to maintain unidirectional air flow.

6. The system of Claim 1, wherein the heat sink (308) includes a component located inside the airframe that is sealed from the cooling duct (306).

7. The system of Claim 6, further comprising an electronics system thermally coupled to the heat sink (308).

8. A method for passive forced convection cooling comprising:
creating a constant air flow through an internal area of an airplane (100) when an intake port (302) is located in an area of high pressure on the airplane (100) and an exhaust port (304) is located on an area of low pressure of the aircraft (100), the intake port (302) and exhaust port (304) connected by a cooling duct (306); and
cooling a temperature sensitive device having a heat sink (308) in communication with the cooling duct (306).

9. The method of Claim 8 wherein the intake port (202) and the exhaust port (304) are located on a wing (200) of an airplane (100).

10. The method of Claim 8 wherein the intake port (302) and the exhaust port (304) are located on a fuselage (104) of an airplane (100).
